# EUROPÄISCHE PATENTSCHRIFT

(11) **EP 4 293 443 B1**
(45) Veröffentlichungstag und Bekanntmachung des Hinweises auf die Patenterteilung: **30.07.2025**
(21) Anmeldenummer: 22305875.1
(22) Anmeldetag: 15.06.2022
(51) Int. Cl.: G05B 19/05, G06N 3/063

(54) **VERFAHREN ZUM INTEGRIEREN EINES FUNKTIONSBLOCKS MIT KÜNSTLICHER INTELLIGENZ**
METHOD FOR THE INTEGRATION OF FUNCTION BLOCKS WITH ARTIFICIAL INTELLIGENCE
PROCÉDÉ D'INTEGRATION DE BLOCS FUNCTIONELS AVEC INTELLIGENCE ARTIFICIELLE

(43) Veröffentlichungstag der Anmeldung: 20.12.2023
(73) Patentinhaber: Schneider Electric Industries SAS, 92500 Rueil-Malmaison (FR)
(72) Erfinder: Furth, Sebastian, 97950 Grossrinderfeld (DE)
(74) Vertreter: Manitz Finsterwald Patent- und Rechtsanwaltspartnerschaft mbB

(56) Entgegenhaltungen:
- EP-A1- 3 671 571
- WO-A1-2020/040721
- WO-A1-2021/076093
- DE-A1- 102018 216 456
- LYU GUOLIN ET AL: "Towards IEC 61499-Based Distributed Intelligent Automation: A Literature Review", IEEE TRANSACTIONS ON INDUSTRIAL INFORMATICS, IEEE SERVICE CENTER, NEW YORK, NY, US, vol. 17, no. 4, 17 August 2020 (2020-08-17), pages 2295 - 2306, XP011831147, ISSN: 1551-3203, [retrieved on 20210111], DOI: 10.1109/TII.2020.3016990

## Beschreibung

Die vorliegende Erfindung betrifft ein Verfahren zum Integrieren zumindest eines KI-Funktionsblocks, welcher eine künstliche Intelligenz umfasst, in eine Steuerung für eine industrielle Maschine.

Es ist grundsätzlich bekannt, sogenannte künstliche Intelligenzen, also Maschinenlernverfahren, neuronale Netze, Support-Vektormaschinen (SVMs) und dergleichen, in industriellen Verfahren einzusetzen. Ein solcher Einsatz erfolgt allerdings nicht standardmäßig.

Daher ergeben sich für den Einsatz künstlicher Intelligenzen in industriellen Steuerungen häufig hohe Hürden. So bestehen viele verschiedene Architekturen für solche künstlichen Intelligenzen, die in unterschiedlichen Programmiersprachen und mit unterschiedlichen Schnittstellen implementiert sein können. Aufgrund der vielen Varianten können leicht Inkompatibilitäten bei der Integration und/oder Ausführung einer künstlichen Intelligenz in einer industriellen Steuerung entstehen. Die Integration einer künstlichen Intelligenz erfordert deshalb üblicherweise einen hohen Aufwand.

Aus der WO 2021/076093 A1 ist ein Verfahren gemäß dem Oberbegriff des Anspruchs 1 bekannt. Die WO 2020/040721 A1 beschreibt ein Beschleunigungsmodul für künstliche Intelligenz. Die EP 3 671 571 A1 betrifft ein Verfahren zur Erzeugung eine KI-Modells. Keines der vorgenannten Dokumente betrifft eine IEC 61499 Laufzeitumgebung.

Es ist die der Erfindung zugrunde liegende Aufgabe, ein Verfahren anzugeben, welches die Integration einer künstlichen Intelligenz in die Steuerung einer industriellen Maschine vereinfacht und beschleunigt.

Diese Aufgabe wird durch ein Verfahren gemäß Anspruch 1 gelöst.

Bei dem erfindungsgemäßen Verfahren wird für den KI-Funktionsblock ein KI-Modell zur Ausführung in dem KI-Funktionsblock ausgewählt, z.B. aus einer Vielzahl von KI-Modellen. Weiterhin wird der KI-Funktionsblock zumindest teilweise automatisiert mit weiteren Funktionsblöcken einer Steuerungssoftware der industriellen Maschine verknüpft. Schließlich wird der KI-Funktionsblock zumindest teilweise automatisiert zur Ausführung gebracht, wobei die Ausführung des KI-Funktionsblocks bevorzugt mittels einer IEC 61499 Laufzeitumgebung erfolgt.

Die Erfindung stellt somit ein in großen Teilen automatisiertes Verfahren bereit, bei welchem ein Bediener z.B. lediglich angeben muss, dass überhaupt ein KI-Funktionsblock benötigt wird, welches KI-Modell in dem KI-Funktionsblock ausgeführt werden soll und wie der KI-Funktionsblock mit den weiteren Funktionsblöcken verbunden sein soll. Der Bediener benötigt somit nur wenige Klicks bis der KI-Funktionsblock funktionsfähig in die Steuerungssoftware der industriellen Maschine integriert ist und ausgeführt werden kann. Insbesondere benötigt der Bediener keine Kenntnisse über die zur Ausführung des KI-Modells benötigten Software-Bibliotheken (KI-Inferenzmaschinen). Ferner muss er sich auch nicht mit der Konfiguration der Kommunikation zwischen KI-Modell und Steuerungssoftware auseinandersetzen.

Steuerungsaufgaben, die durch eine künstliche Intelligenz verbessert oder erleichtert werden können, können somit mit geringem Aufwand in die Steuerungssoftware integriert werden. Die Zeitdauer bis zur Funktionsfähigkeit ist dabei deutlich reduziert, wodurch beispielsweise Veränderungen an bestehenden Maschinen deutlich schneller erfolgen können, wodurch wiederum Produktionsausfälle verringert werden. Auch beim Aufbau neuer industrieller Maschinen wird eine Zeitverkürzung erreicht, wodurch die "Time-to-Market" reduziert werden kann.

Bei der Steuerung der industriellen Maschine kann es sich beispielsweise um mehrere mittels eines Datennetzwerks verbundene Recheneinrichtungen (PLCs, Computer, etc.) handeln, die gemeinsam die Steuerung der industriellen Maschine bewirken. Die verschiedenen Recheneinrichtungen können dabei die durch die Funktionsblöcke vorgegebenen Funktionen ausführen.

Die industrielle Maschine kann eine Vielzahl von Feldgeräten, beispielsweise Sensoren und Aktoren, umfassen. Die Feldgeräte sowie die Recheneinrichtungen können über das Datennetzwerk miteinander verbunden sein, wobei es sich bei dem Datennetzwerk bevorzugt um einen Feldbus (z.B. Sercos III, EtherCAT, EIP und dergleichen) handeln kann. Insbesondere basiert das Zusammenwirken der Recheneinrichtungen auf IEC 61499, wie später noch genauer ausgeführt. Bevorzugt werden die Funktionsblöcke auf verteilten Recheneinrichtungen ausgeführt. Zudem können die Funktionsblöcke ereignisbasiert ("eventbasiert") miteinander kommunizieren.

Die Steuerungssoftware kann in Funktionsblöcke gegliedert sein, wobei bei der Konfiguration der Steuerungssoftware die Verbindungen bzw. Verknüpfungen zwischen den Funktionsblöcken definiert werden, sodass sich ein gewünschtes Steuerungsverhalten der Steuerungssoftware ergibt. Zumindest einer der Funktionsblöcke kann als KI-Funktionsblock ausgebildet sein, der zur Ausführung des KI-Modells ausgebildet ist. Das KI-Modell kann beispielsweise ein neuronales Netz, einen Machine-Learning-Algorithmus, eine Support-Vektormaschine (SVM) und dergleichen umfassen. Überdies kann das KI-Modell auch KI-Varianten außerhalb des Machine-Learning-Bereichs umfassen, beispielsweise regelbasierte KI-Systeme, KI-Systeme auf Basis logischer Schlussfolgerungen (Logic Reasoning), Planungs- und Optimierungsalgorithmen, Suchalgorithmen, etc. Die Vielzahl der einsetzbaren KI-Modelle ist ein Vorteil des hierin geschilderten Vorgehens, da die notwendige Laufzeitumgebung passend initialisiert und mit der Steuerungssoftware in Verbindung gebracht wird.

Das KI-Modell kann beispielsweise eine Klassifizierungsaufgabe erfüllen oder eine Bildverarbeitung durchführen. Beispielsweise kann das KI-Modell ausgebildet sein, in dem industriellen Prozess hergestellte Teile auf ihre korrekte Form und/oder Anordnung hin zu überprüfen und ein entsprechendes Ergebnis auszugeben. Der KI-Funktionsblock kann daher beispielsweise mit weiteren Funktionsblöcken verknüpft sein, die dem KI-Funktionsblock die auszuwertenden Bilder übergeben und das Berechnungsergebnis des KI-Funktionsblocks weiterverarbeiten.

Bei dem KI-Modell kann es sich insbesondere um ein bereits trainiertes Modell handeln, dass bereit für den Produktiveinsatz ist.

Das Verknüpfen der Funktionsblöcke kann beispielsweise das grafische Verbinden der Funktionsblöcken in einer grafischen Benutzeroberfläche umfassen, beispielsweise durch grafische Elemente, welche insbesondere eine Verbindung eines Ausgangs eines Funktionsblocks mit einem Eingang eines anderen Funktionsblöcken anzeigen. Wird von einem Bediener eine solche Verbindung grafisch erzeugt, können automatisch die Kommunikationsschnittstellen geschaffen werden, um dann eine tatsächliche Datenverbindung zwischen den jeweiligen Funktionsblöcken zu schaffen.

Ebenfalls kann das Verknüpfen eine Verknüpfung auf Code-Ebene umfassen, insbesondere durch Setzen von Ein- und Ausgangsvariablen, beispielsweise in einem Quellcode. Der KI-Funktionsblock ist damit in die Steuerung der industriellen Maschine eingebunden. Allgemein gesprochen, kann der KI-Funktionsblock also Sensordaten (Messwerte, Bilddaten und dergleichen) erhalten und auswerten.

Überdies können die von dem KI-Funktionsblock erzeugten Berechnungsergebnisse für die Steuerung der Aktoren des industriellen Prozesses herangezogen werden.

Durch die Verknüpfung der Funktionsblöcke wird insbesondere definiert, über welche Datenschnittstellen die Funktionsblöcke Daten, Ereignisse und dergleichen austauschen. Zudem kann definiert werden, welche Funktionsblöcke mit welchen anderen Funktionsblöcken kommunizieren. Die Funktionsblöcke können gemeinsam zumindest einen Teil der Steuerungssoftware der industriellen Maschine bilden.

Wie später noch genauer ausgeführt wird, kann z.B. automatisch erkannt werden, welche Ein- und Ausgänge das KI-Modell und damit der KI-Funktionsblock benötigt, wodurch dann die Verknüpfung zu den weiteren Funktionsblöcken entsprechend (automatisch) angepasst werden kann.

Das zumindest teilweise automatisierte zur Ausführung bringen des KI-Funktionsblocks kann ein Deployment umfassen. Wie ebenfalls später noch detailliert ausgeführt wird, kann dazu die ausführende Recheneinrichtung (d.h. der Compute-Host) insbesondere automatisch ermittelt werden, wobei der KI-Funktionsblock dann auf der ausführenden Recheneinrichtung zur Ausführung gebracht wird. Die Ausführung des KI-Funktionsblocks erfolgt dabei erfindungsgemäß mittels einer IEC 61499 Laufzeitumgebung oder in einer IEC 61499 Laufzeitumgebung (Runtime Environment - RTE).

Die Laufzeitumgebung nach IEC 61499 umfasst insbesondere die Fähigkeit, dass eine Applikation (d.h. der KI-Funktionsblock und/oder die weiteren Funktionsblöcke bzw. ein Netzwerk von Funktionsblöcken) auf mehrere Recheneinrichtungen (Compute-Hosts) verteilt werden kann. Auf jedem Compute-Host läuft eine eigene IEC 61499 Laufzeitumgebung. Die notwendige Kommunikation ("Cross-Communication") zwischen den Laufzeitumgebungen wird bevorzugt von den Laufzeitumgebungen nach IEC 61499 automatisch generiert.

Beispielsweise bedeutet dies, dass eine IEC 61499 Laufzeitumgebung auf dem am besten passenden Compute-Host initialisiert wird. In dieser Laufzeitumgebung wird dann z.B. nur ein einziger Funktionsblock ausgeführt, insbesondere der KI-Funktionsblock. Neben der IEC 61499 Laufzeitumgebung wird auf diesem Compute-Host, insbesondere automatisch, auch eine Laufzeitumgebung für das KI-Modell aufgesetzt. Beim automatischen Aufsetzen der Laufzeitumgebung für das KI-Modell wird sichergestellt, dass die Laufzeitumgebung zum KI-Modell passt, z.B. kann TensorFlow oder ONNX für Neuronale Netze oder eine mlpack Library für Machine Learning Modelle verwendet werden. Die beiden Laufzeitumgebungen auf demselben Compute-Host können dann sehr effizient Daten miteinander austauschen, um u.a. Echtzeitanforderungen zu erfüllen.

Bei IEC 61499 handelt es sich um eine ereignisbasierte Programmiersprache (Event Driven Language). Eine IEC 61499 Laufzeitumgebung erlaubt die Ausführung der Steuerungssoftware auf verschiedenen verteilten Hardwareressourcen, beispielsweise PLCs und/oder Linux und/oder Windows Geräten. Für jeden Funktionsblock in der IEC 61499 Laufzeitumgebung kann die ausführende Hardware und/oder die ausführende Recheneinrichtung einzeln bestimmt werden. Auf diese Weise können manche Funktionsblöcken beispielsweise auf einem Linux System, andere Funktionsblöcken hingegen auf einem Windows System ausgeführt werden.

Durch die erfindungsgemäße Nutzung der IEC 61499 Laufzeitumgebung kann der KI-Funktionsblock flexibel in eine verteilte Architektur von Recheneinrichtungen integriert werden, wobei der KI-Funktionsblock dadurch auf einfache Weise auf einer geeigneten Recheneinrichtung (z.B. mit ausreichend Rechenleistung) ausgeführt werden kann. Durch die IEC 61499 Laufzeitumgebung wird zudem sichergestellt, dass die Kommunikation zwischen dem KI-Funktionsblock und den weiteren Funktionsblöcken der Steuerungssoftware (gegebenenfalls auf anderen Recheneinrichtungen) automatisch korrekt erfolgt. Die Kommunikation kann dabei über das vorgenannte Datennetzwerk erfolgen.

Weitere Ausführungsformen der Erfindung sind der Beschreibung, den Unteransprüchen sowie den Zeichnungen zu entnehmen.

Gemäß einer ersten Ausführungsform sind der KI-Funktionsblock und/oder die weiteren Funktionsblöcke Funktionsblöcke gemäß IEC 61499. Erfindungsgemäß können die Funktionsblöcken durch Ereignisse (Events) aktiviert werden und selbst auch Ereignisse erzeugen, um andere Funktionsblöcken zu aktivieren. Die Funktionsblöcke und insbesondere der KI-Funktionsblock erscheinen zumindest von extern als IEC 61499 Funktionsblöcke. Der interne Aufbau des KI-Funktionsblocks wird nachfolgend noch detailliert beschrieben.

Gemäß einer weiteren Ausführungsform umfasst der KI-Funktionsblock einen Runtime-Container, welcher die IEC 61499 Laufzeitumgebung zur Verfügung stellt, und einen KI-Container, in welchem die künstliche Intelligenz ausgeführt wird, wobei der Runtime-Container und der KI-Container miteinander kommunizieren. Allgemein gesprochen kann der KI-Funktionsblock somit in einer virtualisierten Umgebung ausgeführt werden.

Der Runtime-Container stellt bevorzugt Datenschnittstellen zu den weiteren Funktionsblöcken bereit. Durch die Kommunikation des Runtime-Containers mit dem KI-Container wird es bevorzugt ermöglicht, die KI-Funktionen auszuführen. In dem KI-Container wird das KI-Modell ausgeführt. Hierbei ergibt sich insbesondere der Vorteil, dass durch die Kommunikation des KI-Containers mit der IEC 61499 Laufzeitumgebung, die Kommunikation mit den weiteren Funktionsblöcken automatisch in einem Datenformat erfolgen kann, welches auch für die weiteren Funktionsblöcken (die beispielsweise gemäß IEC 61499 ausgebildet sind) passend ist. Durch die Bereitstellung der IEC 61499 Funktionalität durch den Runtime-Container wird die Funktionalität des KI-Modells direkt auf dem Control Code Level integriert, d.h. direkt in die Steuerungssoftware integriert.

Bevorzugt führt der Runtime-Container eine virtuelle IEC 61499 Laufzeitumgebung aus. Je nach ausgewählten KI-Modell kann der jeweils benötigte KI-Container ermittelt werden, bevorzugt automatisch. Der KI-Container stellt dabei das "Inference-Environment" für das KI-Modell bereit. Insbesondere können verschiedene KI-Container benötigt werden, je nachdem ob das KI-Modell beispielsweise in PyTorch, ONNX, KERAS, Tensorflow und dergleichen erstellt wurde. Bei dem KI-Container und/oder dem Runtime-Container kann es sich beispielsweise um einen Docker-Container einen LXC-Container, einen containerd-Container und dergleichen handeln.

Der benötigte KI-Container kann zunächst basierend auf dem KI-Modell vorausgewählt werden. So kann für ein KI-Modell, welches ein Neuronales Netz ist, ein KI-Container mit einem passenden Framework (z.B. Tensorflow, PyTorch oder ONNX) vorausgewählt werden. Hingegen für ein KI-Modell mit einem Machine Learning Modell (z.B. SVM) kann stattdessen ein KI-Container mit einem Framework basierend auf "mlpack" vorausgewählt werden. In einem zweiten Schritt kann dann ein KI-Container mit der passenden Version des Frameworks (z.B. Tensorflow 1 oder Tensorflow 2) ausgewählt und verwendet werden.

Insbesondere steht eine Sammlung von KI-Containern zur Verfügung, welche bevorzugt die entsprechende Laufzeitumgebung kapseln, wobei auf Basis des KI-Modells der am besten passende KI-Container ausgewählt wird. Hierdurch ist es möglich, eine breite Vielfalt an KI-Modellen automatisch zur Ausführung zu bringen. Eine Beschränkung z.B. nur auf Neuronale Netze in Tensorflow 1 kann entfallen.

Erfindungsgemäß wird die Steuerungssoftware auf mehreren verschiedenen, mittels eines Datennetzwerks verbundenen Recheneinrichtungen ausgeführt, wobei eine der Recheneinrichtungen automatisiert für die Ausführung des KI-Funktionsblocks ausgewählt wird, beispielsweise anhand der verfügbaren Rechenleistung der Recheneinrichtung. Gemäß dem Verfahren kann also überprüft werden, welche der Recheneinrichtungen am geeignetsten für die Ausführung des KI-Funktionsblocks ist. Neben der verfügbaren Rechenleistung der Recheneinrichtung kann alternativ oder zusätzlich auch beispielsweise das Vorhandensein spezieller für die Ausführung von Maschinenlernverfahren eingerichteter Hardware in der Recheneinrichtung ausschlaggebend sein. Nach der Auswahl der Recheneinrichtung (d.h. des Compute-Hosts) erfolgt eine Initialisierung auf der ausgewählten Recheneinrichtung. Dabei kann ein sogenannter POD gebildet werden, welcher mehrere Container umfasst. Insbesondere kann der KI-Container und der Runtime-Container gemeinsam auf der Recheneinrichtung initialisiert werden.

Gemäß einer weiteren Ausführungsform werden der Runtime-Container und der KI-Container automatisch auf der ausgewählten Recheneinrichtung initialisiert. Bevorzugt handelt es sich für den Runtime-Container und den KI-Container um dieselbe Recheneinrichtung.

Gemäß einer weiteren Ausführungsform erfolgt nach dem Initialisieren des KI-Containers ein, bevorzugt automatisches, Deployment des ausgewählten KI-Modells in den KI-Container. Alternativ oder zusätzlich erfolgt nach dem Initialisieren des Runtime-Containers ein, insbesondere automatisches, Deployment, bevorzugt einer Instanz, des Runtime-Containers auf die ausgewählte Recheneinrichtung. Als Deployment (Softwareverteilung) wird insbesondere die halb- oder vollautomatisierte Installation und Konfiguration von Software (hier des KI-Containers und/oder des Runtime-Containers) bezeichnet.

Gemäß einer weiteren Ausführungsform werden der KI-Container und der Runtime-Container auf derselben Hardware ausgeführt und kommunizieren insbesondere direkt über die gemeinsame Hardware, beispielsweise über gemeinsam genutzte Speicherbereiche. Die Kommunikation auf derselben Hardware kann somit sehr schnell und Latenzarm erfolgen, wodurch die Funktion der künstlichen Intelligenz beschleunigt werden kann.

Gemäß einer weiteren Ausführungsform werden die Kommunikationsschnittstellen zwischen dem KI-Container und dem Runtime-Container automatisch konfiguriert. Insbesondere werden für die Konfiguration der Kommunikationsschnittstellen zwischen dem KI-Container und dem Runtime-Container die Eingänge und die Ausgänge des KI-Modells, bevorzugt automatisch, ermittelt und die Kommunikationsschnittstellen zwischen dem KI-Container und dem Runtime-Container an die Eingänge und die Ausgänge angepasst. Wird beispielsweise festgestellt, dass das KI-Modell mehrere verschiedene Eingänge mit verschiedenen Datentypen benötigt, das KI-Modell aber nur einen Ausgang eines einzigen Datentyps bereitstellt, so kann der Runtime-Container Kommunikationsschnittstellen (d.h. Datenschnittstellen) bereitstellen, über die dem KI-Modell genau die benötigten Eingänge bereitgestellt werden und über die das vom KI-Modell ermittelte Ergebnis an dem Ausgang abgerufen werden kann.

Überdies kann der Runtime-Container nach extern, d.h. für die weiteren Funktionsblöcke, die von dem KI-Modell benötigten Eingänge und Ausgänge bereitstellen. Im vorliegenden Beispiel würde der KI-Funktionsblock dann mehrere Eingänge mit den unterschiedlichen Datentypen und den einen genannten Ausgang umfassen. Die Ein- und Ausgänge des KI-Funktionsblocks stehen dann den weiteren Funktionsblöcken zur Verknüpfung zur Verfügung. Insbesondere können die automatisch ermittelten Eingänge und Ausgänge einem Bediener grafisch in einer grafischen Benutzeroberfläche angezeigt werden. Beispielsweise können die Ein- und Ausgänge des KI-Funktionsblocks basierend auf Informationen, insbesondere basierend auf Meta-Daten, des KI-Modells ermittelt werden. Die Meta-Daten können für neuronale Netze z.B. die "Input Shapes" und "Output Shapes" umfassen, d.h. die Dimensionen der Tensoren/Matrizen der Ein- und Ausgänge.

Gemäß einer weiteren Ausführungsform wird das Verfahren durch einen Bediener angestoßen, wobei der Bediener zunächst einen KI-Funktionsblock und anschließend das KI-Modell insbesondere in Form einer ausführbaren Datei oder einer Binärdatei, für den KI-Funktionsblock auswählt. Danach kann der Bediener zusätzlich das Deployment anstoßen. Insgesamt kann es somit lediglich notwendig sein, drei Schritte auszuführen (Auswahl des KI-Funktionsblocks, Auswahl des KI-Modells und Anstoßen des Deployments). Durch diese drei Schritte kann der Bediener grafisch in einer grafischen Bedienoberfläche geführt werden. Dabei kann der Bediener dann im ersten Schritt grafisch den KI-Funktionsblock auswählen. Im zweiten Schritt kann der Bediener das KI-Modell auswählen, beispielsweise durch Auswahl aus einer Dropdownliste oder durch Angabe einer Datei mit dem KI-Modell. Durch die Auswahl einer ausführbaren Datei und/oder einer Binärdatei kann das KI-Modell direkt in dem KI-Funktionsblock ausgeführt werden, ohne dass beispielsweise ein Kompilieren notwendig ist. Im letzten Schritt kann der Bediener dann das Deployment anstoßen, woraufhin dann automatisch die Recheneinrichtung ausgewählt und der Funktionsblock auf der Recheneinrichtung ausgeführt wird. Die vorgenannten Schritte können dem Bediener insbesondere von einem Engineering System angezeigt werden. Bei dem Engineering System kann es sich um eine Software und/oder Hardware zur Konfiguration und Programmierung der Recheneinrichtungen der industriellen Maschine handeln. Das Engineering System kann die Konfiguration der Recheneinrichtungen gemäß IEC 61499 vornehmen.

Weiterer Gegenstand der Erfindung ist eine industrielle Maschine gemäß Anspruch 11. Die industrielle Maschine ist unter anderem ausgebildet,
- ein Auswählen eines KI-Modells für einen KI-Funktionsblock zu ermöglichen, wobei das KI-Modell in dem KI-Funktionsblock ausgeführt wird,
- den KI-Funktionsblock zumindest teilweise automatisiert mit weiteren Funktionsblöcken einer Steuerungssoftware der industriellen Maschine zu verknüpfen,
- den KI-Funktionsblock zumindest teilweise automatisiert zur Ausführung zu bringen, wobei die Ausführung des KI-Funktionsblocks mittels einer IEC 61499 Laufzeitumgebung erfolgt.

Die vorgenannten Funktionen der industriellen Maschine können beispielsweise durch ein Engineering System bereitgestellt werden, welches Teil der industriellen Maschine sein kann. Insbesondere kann das Engineering System eine Recheneinrichtung umfassen, die zumindest zeitweise über ein Datennetzwerks mit der industriellen Maschine verbunden wird.

Gemäß einer Ausführungsform der industriellen Maschine umfasst die industrielle Maschine mehrere Recheneinrichtungen, wobei verschiedene Recheneinrichtungen verschiedene der weiteren Funktionsblöcken ausführen und die Funktionsblöcken gemäß IEC 61499 miteinander kommunizieren. Die Funktionen der industriellen Maschine werden also bevorzugt mittels verteilter Hardware gesteuert.

Schließlich betrifft die Erfindung noch ein Computerprogrammprodukt gemäß Anspruch 13.

Die Ausführungen zu dem erfindungsgemäßen Verfahren gelten für die erfindungsgemäße industrielle Maschine und das erfindungsgemäß Computerprogrammprodukt entsprechend. Dies gilt insbesondere hinsichtlich Vorteilen und bevorzugten Ausführungsformen. Es versteht sich, dass sämtliche hierin genannten Ausführungsformen und Merkmale miteinander kombiniert werden können, sofern nicht explizit etwas Gegenteiliges angegeben ist.

Nachfolgend wird die Erfindung rein beispielhaft unter Bezugnahme auf die Zeichnungen beschrieben. Es zeigen:
**Fig. 1** eine schematische Ansicht einer industriellen Maschine mit mehreren Recheneinrichtungen;
**Fig. 2** miteinander verknüpfte Funktionsblöcke zur Steuerung der industriellen Maschine;
**Fig. 3** Schritte zur Integration einer künstlichen Intelligenz in einen Funktionsblock;
**Fig. 4** schematisch die Ausführung eines KI-Funktionsblocks auf einer Recheneinrichtung.

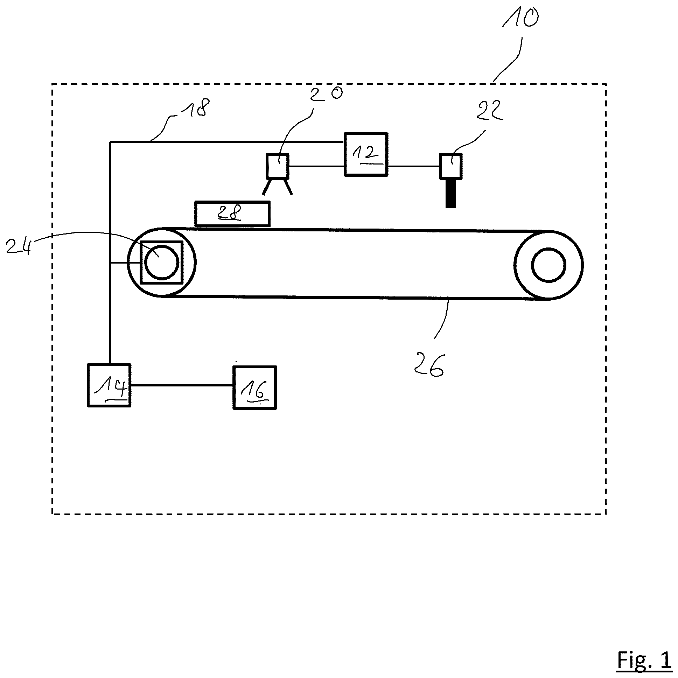

Fig. 1 zeigt eine industrielle Maschine 10. Die industrielle Maschine 10 umfasst drei Recheneinrichtungen 12, 14, 16. Die Recheneinrichtungen 12,14 können beispielsweise als speicherprogrammierbare Steuerungen (SPS oder PLC) ausgeführt sein, wohingegen die Recheneinrichtung 16 als Windows-Gerät mit einem Engineering System ausgeführt sein kann.

Die Recheneinrichtungen 12, 14, 16 sind mittels eines Datennetzwerks 18 in Form eines Feldbusses miteinander verbunden. Die industrielle Maschine 10 umfasst zudem eine Kamera 20, einen Greifer 22 sowie einen Motor 24 eines Förderband 26. Die Feldgeräte 20, 22, 24 sind ebenfalls an das Datennetzwerk 18 angeschlossen. Mit dem Förderband 26 können von der industriellen Maschine 10 zu verarbeitenden Werkstücke 28 transportiert werden.

Die Werkstücke 28 werden dabei von der Kamera 20 aufgenommen. Anhand der von der Kamera 20 aufgenommenen Bilder sollen fehlerhafte Werkstücke 28 erkannt und mittels des Greifers 22 aussortiert werden.

Auf der Recheneinrichtung 16 wird ein Engineering System ausgeführt, welches die Programmierung und Konfiguration der Feldgeräte 20, 22, 24 erlaubt. Das Engineering System legt auch fest, welche der Recheneinrichtungen 12, 14, 16 welche Teile der Programmierung und Konfiguration ausführt.

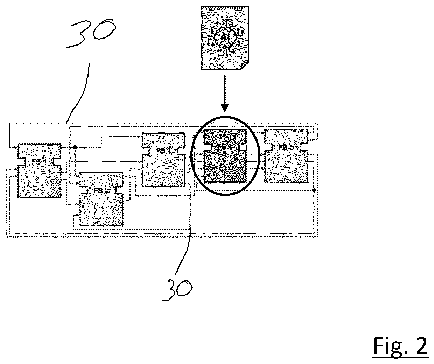

In Fig. 2 ist schematisch eine Ansicht gezeigt, wie sie auch einem Bediener des Engineering Systems angezeigt wird. Die Ansicht zeigt verschiedene Funktionsblöcke FB1-FB5. Die Funktionsblöcke FB1-FB5 sind durch grafische Verbinder 30 miteinander verbunden. Die grafischen Verbinder 30 geben an, wie Ausgänge eines Funktionsblocks mit Eingängen eines anderen Funktionsblocks verknüpft sind.

Die Funktionsblöcke können unterschiedliche Aufgaben erfüllen. Beispielsweise kann der Funktionsblock FB1 die Steuerung des Motors 24 bewirken und so die Bewegung der Werkstücke 28 Steuern. Über die grafischen Verbinder 30 kann ein Bediener festlegen, dass Ausgänge eines Funktionsblocks anderen Funktionsblöcken Informationen weiterleiten. Beispielsweise kann nach dem Bewegen eines Werkstücks 28 der Funktionsblock FB1 dem Funktionsblock FB3 mitteilen, dass nun ein Werkstück 28 im Bereich der Kamera 20 vorliegt. Der Funktionsblock FB3 kann dann die Kamera 20 anweisen, ein Bild des Werkstücks 28 aufzunehmen. Das Bild der Kamera 20 kann anschließend an den Funktionsblock FB4 übertragen werden.

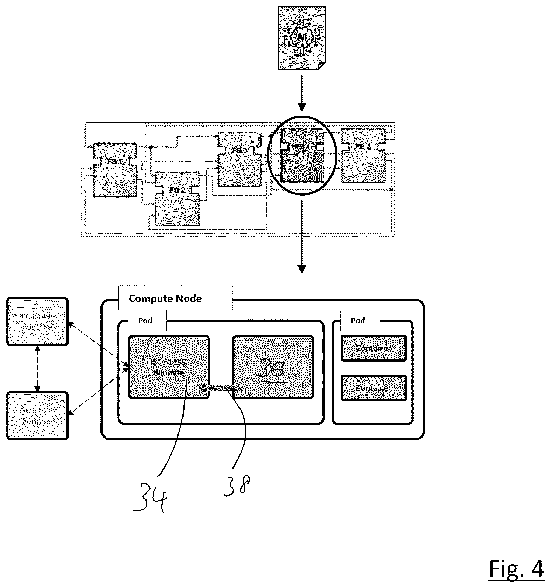

Im Funktionsblock FB4 soll nun eine künstliche Intelligenz ("AI" in Fig. 2 und Fig. 4) dazu ausgeführt werden, die im Funktionsblock FB3 erzeugten Bilder auszuwerten.

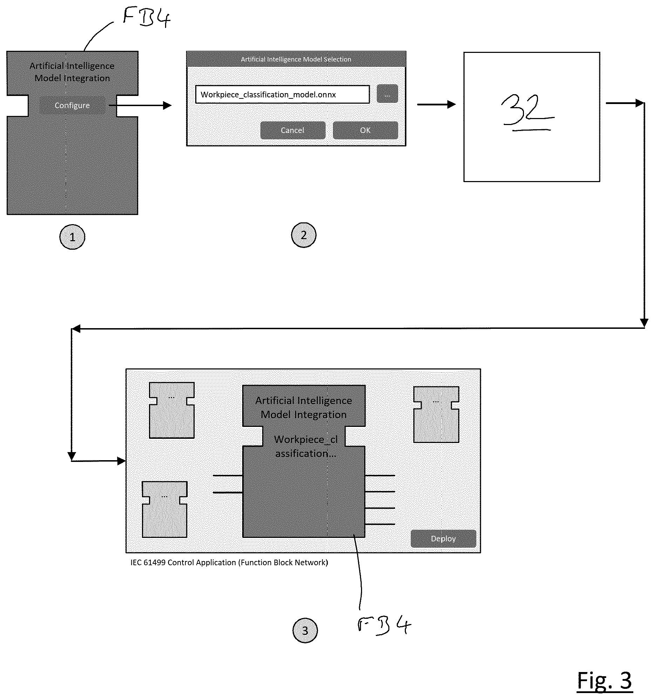

Fig. 3 zeigt nun die Schritte, die ein Bediener durchführen kann, um den Funktionsblock FB4 zu einem KI-Funktionsblock zu konfigurieren und die Ausführung des KI-Funktionsblocks zu beginnen. Im ersten Schritt wählt der Bediener einen KI-Funktionsblock aus. Durch einen Klick auf Konfigurieren ("Configure") kann dann im zweiten Schritt eine Binärdatei mit dem KI-Modell ausgewählt werden. Im vorliegenden Beispiel wird eine Datei für die Klassifikation der Werkstücke 28 ausgewählt ("Workpiece_classification_model.onnx"). Nach dem Auswählen erfolgt eine automatische Anpassung 32, bei welcher die Ein- und Ausgänge des KI-Modells ermittelt werden und die Ein- und Ausgänge des KI-Funktionsblocks entsprechend angepasst werden. Schließlich kann der Bediener im dritten Schritt durch einen Klick auf "Deploy" den KI-Funktionsblock zur Ausführung bringen.

Dadurch wird, wie in Fig. 4 gezeigt beispielsweise auf der Recheneinrichtung 12 ein Pod aus zwei Containern, nämlich einem Runtime-Container 34 und einem KI-Container 36 erzeugt. Die Container 34, 36 kommunizieren mittels geteilter Speicherbereiche 38.

Auf der Recheneinrichtung 12 können in einem anderen Pod auch noch weitere Container ausgeführt werden. Der Runtime-Container 34 kommuniziert über das Datennetzwerk 18 mit weiteren Laufzeitumgebungen. Sowohl der Runtime-Container 34 als auch die weiteren Laufzeitumgebungen, welche die weiteren Funktionsblöcke FB1, FB2, FB3 und FB5 ausführen, arbeiten gemäß IEC 61499.

Im Betrieb können die weiteren Funktionsblöcke FB1, FB2, FB3 und FB5 beispielsweise Bilddaten der Kamera 20 an den KI-Funktionsblock FB4 übermitteln. Dort nimmt der Runtime-Container 34 die Daten in Empfang und übermittelt sie über den gemeinsam genutzten Speicherbereich an den KI-Container 36. In dem KI-Container 36 führt das KI-Modell eine Klassifikation durch. Ist die Klassifikation abgeschlossen, so wird das Klassifikationsergebnis über den Runtime-Container 34 an die weiteren Funktionsblöcken FB1, FB2, FB3 und FB5 übergeben. Die weiteren Funktionsblöcken können dann anhand des Klassifikationsergebnisses beispielsweise feststellen, ob der Greifer 22 ein Werkstück 28 aussortieren soll.

Insgesamt ist es für einen Bediener somit mit wenigen Klicks möglich, ein komplexes KI-Modell in die Steuerung der industriellen Maschine 10 zu integrieren.

### Bezugszeichenliste

- 10: industrielle Maschine
- 12: Recheneinrichtung
- 14: Recheneinrichtung
- 16: Recheneinrichtung
- 18: Datennetzwerks
- 20: Kamera
- 22: Greifer
- 24: Motor
- 26: Förderband
- 28: Werkstücke
- 30: grafische Verbinder
- 32: automatische Anpassung
- 34: Runtime-Container
- 36: KI-Container
- 38: gemeinsam genutzter Speicherbereich

- FB1: Funktionsblock
- FB2: Funktionsblock
- FB3: Funktionsblock
- FB4: KI-Funktionsblock
- FB5: Funktionsblock

## Patentansprüche

1. Verfahren zum Integrieren zumindest eines KI-Funktionsblocks (FB4), welcher eine künstliche Intelligenz umfasst, in eine Steuerung für eine industrielle Maschine (10), wobei bei dem Verfahren
- für den KI-Funktionsblock (FB4) ein KI-Modell zur Ausführung in dem KI-Funktionsblock (FB4) ausgewählt wird,
- der KI-Funktionsblock (FB4) zumindest teilweise automatisiert mit weiteren Funktionsblöcken (FB1-FB3, FB5) einer Steuerungssoftware der industriellen Maschine (10) verknüpft wird,
- der KI-Funktionsblock (FB4) zumindest teilweise automatisiert zur Ausführung gebracht wird,
**dadurch gekennzeichnet, dass** die Ausführung des KI-Funktionsblocks (FB4) mittels einer IEC 61499 Laufzeitumgebung erfolgt, wobei die Funktionsblöcke (FB1-FB5) durch Ereignisse aktiviert werden und auch selbst Ereignisse erzeugen, um andere Funktionsblöcke (FB1-FB5) zu aktivieren, wobei die Steuerungssoftware auf mehreren verschiedenen, mittels eines Datennetzwerks verbundenen Recheneinrichtungen (12-16) ausgeführt wird, wobei eine der Recheneinrichtungen (12-16) automatisiert für die Ausführung des KI-Funktionsblocks (FB4) ausgewählt wird.

2. Verfahren nach Anspruch 1,
wobei der KI-Funktionsblock (FB4) und die weiteren Funktionsblöcke (FB1-FB3, FB5) Funktionsblöcke gemäß IEC 61499 sind.

3. Verfahren nach Anspruch 1 oder 2,
wobei der KI-Funktionsblock (FB4) einen Runtime-Container (34), welcher die IEC 61499 Laufzeitumgebung zur Verfügung stellt, und einen KI-Container (36), in welchem die künstliche Intelligenz ausgeführt wird, umfasst, wobei der Runtime-Container (34) und der KI-Container (36) miteinander kommunizieren.

4. Verfahren nach einem der vorstehenden Ansprüche,
wobei eine der Recheneinrichtungen (12-16) anhand der verfügbaren Rechenleistung der Recheneinrichtung (12-16) automatisiert für die Ausführung des KI-Funktionsblocks (FB4) ausgewählt wird.

5. Verfahren nach Ansprüchen 3 und 4,
wobei der Runtime-Container (34) und der KI-Container (36) automatisch auf der ausgewählten Recheneinrichtung (12-16) initialisiert werden.

6. Verfahren nach Anspruch 5,
wobei nach dem Initialisieren des KI-Containers (36) ein Deployment des ausgewählten KI-Modells in den KI-Container (36) erfolgt und/oder nach dem Initialisieren des Runtime-Containers (34) ein, insbesondere automatisches, Deployment, bevorzugt einer Instanz, des Runtime-Containers (34) auf die ausgewählte Recheneinrichtung (12-16) erfolgt.

7. Verfahren nach zumindest einem der Ansprüche 3 bis 6,
wobei der KI-Container (36) und der Runtime-Container (34) auf derselben Hardware ausgeführt werden und direkt über die gemeinsame Hardware kommunizieren, beispielsweise über gemeinsam genutzte Speicherbereiche.

8. Verfahren nach zumindest einem der Ansprüche 3 bis 7,
wobei die Kommunikationsschnittstellen zwischen dem KI-Container (36) und dem Runtime-Container (34) automatisch konfiguriert werden.

9. Verfahren nach Anspruch 8,
wobei für die Konfiguration der Kommunikationsschnittstellen zwischen dem KI-Container (36) und dem Runtime-Container (34) die Eingänge und die Ausgänge des KI-Modells, bevorzugt automatisch, ermittelt werden und die Kommunikationsschnittstellen zwischen dem KI-Container (36) und dem Runtime-Container (34) an die Eingänge und Ausgänge angepasst werden.

10. Verfahren nach einem der vorstehenden Ansprüche,
wobei das Verfahren durch einen Bediener angestoßen wird, wobei der Bediener zunächst einen KI-Funktionsblock (FB4) und anschließend das KI-Modell, insbesondere in Form einer ausführbaren Datei oder einer Binärdatei, für den KI-Funktionsblock (FB4) auswählt.

11. Industrielle Maschine (10), welche ausgebildet ist,
- ein Auswählen eines KI-Modells für einen KI-Funktionsblock (FB4) zu ermöglichen, wobei das KI-Modell in dem KI-Funktionsblock (FB4) ausgeführt wird,
- den KI-Funktionsblock (FB4) zumindest teilweise automatisiert mit weiteren Funktionsblöcken (FB1-FB3, FB5) einer Steuerungssoftware der industriellen Maschine (10) zu verknüpfen,
- den KI-Funktionsblock (FB4) zumindest teilweise automatisiert zur Ausführung zu bringen,
**dadurch gekennzeichnet, dass** die Ausführung des KI-Funktionsblocks (FB4) mittels einer IEC 61499 Laufzeitumgebung erfolgt, wobei die Funktionsblöcke (FB1-FB5) durch Ereignisse aktivierbar sind und auch selbst ausgebildet sind, Ereignisse zu erzeugen, um andere Funktionsblöcke (FB1-FB5) zu aktivieren,
- die industrielle Maschine (10) ferner ausgebildet ist, die Steuerungssoftware auf mehreren verschiedenen, mittels eines Datennetzwerks verbundenen Recheneinrichtungen (12-16) auszuführen, wobei eine der Recheneinrichtungen (12-16) automatisiert für die Ausführung des KI-Funktionsblocks (FB4) ausgewählt wird.

12. Industrielle Maschine (10) nach Anspruch 11, wobei
die industrielle Maschine (10) mehrere Recheneinrichtungen (12-16) umfasst, wobei verschiedene Recheneinrichtungen (12-16) verschiedene der weiteren Funktionsblöcke (FB1-FB3, FB5) ausführen und die Funktionsblöcke gemäß IEC 61499 miteinander kommunizieren.

13. Computerprogrammprodukt, umfassend Befehle, die bei der Ausführung des Programms durch einen Computer diesen veranlassen, das Verfahren nach zumindest einem der Ansprüche 1 bis 10 auszuführen.

## Claims

1. A method of integrating at least one AI function block (FB4), which comprises artificial intelligence, into a controller for an industrial machine (10), wherein, in the method,
- for the AI function block (FB4), an AI model is selected for execution in the AI function block (FB4),
- the AI function block (FB4) is linked in an at least partly automated manner to further function blocks (FB1-FB3, FB5) of control software of the industrial machine (10),
- the AI function block (FB4) is brought to execution in an at least partly automated manner,
**characterized in that** the execution of the AI function block (FB4) takes place by means of an IEC 61499 runtime environment, wherein the function blocks (FB1-FB5) are activated by events and also generate events themselves to activate other function blocks (FB1-FB5),
wherein the control software is executed on a plurality of different computing devices (12-16) connected by means of a data network, wherein one of the computing devices (12-16) is selected in an automated manner for the execution of the AI function block (FB4).

2. A method according to claim 1,
wherein the AI function block (FB4) and the further function blocks (FB1-FB3, FB5) are function blocks according to IEC 61499.

3. A method according to claim 1 or 2,
wherein the AI function block (FB4) comprises a runtime container (34), which provides the IEC 61499 runtime environment, and an AI container (36) in which the artificial intelligence is executed, wherein the runtime container (34) and the AI container (36) communicate with one another.

4. A method according to any one of the preceding claims,
wherein one of the computing devices (12-16) is selected in an automated manner for the execution of the AI function block (FB4) based on the available computing power of the computing device (12-16).

5. A method according to claim 3 and 4,
wherein the runtime container (34) and the AI container (36) are automatically initialized on the selected computing device (12-16).

6. A method according to claim 5,
wherein, after the initialization of the AI container (36), a deployment of the selected AI model into the AI container (36) takes place and/or,
after the initialization of the runtime container (34), a deployment, in particular an automatic deployment, preferably of an instance, of the runtime container (34) to the selected computing device (12-16) takes place.

7. A method according to at least one of the claims 3 to 6,
wherein the AI container (36) and the runtime container (34) are executed on the same hardware and communicate directly via the common hardware, for example via jointly used memory areas.

8. A method according to at least one of the claims 3 to 7,
wherein the communication interfaces between the AI container (36) and the runtime container (34) are automatically configured.

9. A method according to claim 8,
wherein, for the configuration of the communication interfaces between the AI container (36) and the runtime container (34), the inputs and the outputs of the AI model are determined, preferably automatically determined, and the communication interfaces between the AI container (36) and the runtime container (34) are adapted to the inputs and outputs.

10. A method according to any one of the preceding claims,
wherein the method is initiated by an operator, wherein the operator first selects an AI function block (FB4) and then selects the AI model, in particular in the form of an executable file or a binary file, for the AI function block (FB4).

11. An industrial machine (10) which is configured
- to enable a selection of an AI model for an AI function block (FB4), wherein the AI model is executed in the AI function block (FB4),
- to link the AI function block (FB4) in an at least partly automated manner to further function blocks (FB1-FB3, FB5) of control software of the industrial machine (10),
- to bring the AI function block (FB4) to execution in an at least partly automated manner,
**characterized in that** the execution of the AI function block (FB4) takes place by means of an IEC 61499 runtime environment, wherein the function blocks (FB1-FB5) can be activated by events and also configured themselves to generate events in order to activate other function blocks (FB1-FB5),
- the industrial machine (10) is further configured to execute the control software on a plurality of different computing devices (12-16) connected by means of a data network, wherein one of the computing devices (12-16) is selected in an automated manner for the execution of the AI function block (FB4).

12. An industrial machine (10) according to claim 11, wherein
the industrial machine (10) comprises a plurality of computing devices (12-16), wherein different computing devices (12-16) execute different ones of the further function blocks (FB1-FB3, FB5) and the function blocks communicate with one another according to IEC 61499.

13. A computer program product comprising commands which, on the execution of the program by a computer, cause the computer to perform the method according to at least one of the claims 1 to 10.

## Revendications

1. Procédé pour intégrer au moins un bloc fonctionnel IA (FB4), qui comprend une intelligence artificielle, dans une commande pour une machine industrielle (10), dans lequel
- pour le bloc fonctionnel IA (FB4), un modèle IA est sélectionné pour être exécuté dans le bloc fonctionnel IA (FB4),
- le bloc fonctionnel IA (FB4) est relié de manière au moins partiellement automatisée à d'autres blocs fonctionnels (FB1-FB3, FB5) d'un logiciel de commande de la machine industrielle (10),
- le bloc fonctionnel IA (FB4) est amené à s'exécuter de manière au moins partiellement automatisée,
**caractérisé en ce que** l'exécution du bloc fonctionnel IA (FB4) s'effectue au moyen d'un environnement d'exécution IEC 61499, les blocs fonctionnels (FB1-FB5) étant activés par des événements et générant eux-mêmes des événements afin d'activer d'autres blocs fonctionnels (FB1-FB5), le logiciel de commande étant exécuté sur plusieurs dispositifs de calcul différents (12-16) reliés au moyen d'un réseau de données, l'un des dispositifs de calcul (12-16) étant sélectionné de manière automatisée pour l'exécution du bloc fonctionnel IA (FB4).

2. Procédé selon la revendication 1,
dans lequel le bloc fonctionnel KI (FB4) et les autres blocs fonctionnels (FB1-FB3, FB5) sont des blocs fonctionnels conformes à la norme IEC 61499.

3. Procédé selon la revendication 1 ou 2,
dans lequel le bloc fonctionnel IA (FB4) comprend un conteneur d'exécution (34) qui fournit l'environnement d'exécution IEC 61499 et un conteneur IA (36) dans lequel l'intelligence artificielle est exécutée, le conteneur d'exécution (34) et le conteneur IA (36) communiquant entre eux.

4. Procédé selon l'une des revendications précédentes,
dans lequel l'un des dispositifs de calcul (12-16) est sélectionné de manière automatisée pour l'exécution du bloc fonctionnel IA (FB4) en fonction de la puissance de calcul disponible du dispositif de calcul (12-16).

5. Procédé selon les revendications 3 et 4,
dans lequel le conteneur d'exécution (34) et le conteneur IA (36) sont initialisés automatiquement sur le dispositif de calcul sélectionné (12-16).

6. Procédé selon la revendication 5,
dans lequel, après l'initialisation du conteneur IA (36), un déploiement du modèle IA sélectionné dans le conteneur IA (36) a lieu et/ou après l'initialisation du conteneur d'exécution (34), un déploiement, en particulier automatique, de préférence d'une instance, du conteneur d'exécution (34) a lieu sur le dispositif de calcul sélectionné (12-16).

7. Procédé selon au moins l'une des revendications 3 à 6,
dans lequel le conteneur IA (36) et le conteneur d'exécution (34) sont exécutés sur le même matériel et communiquent directement via le matériel commun, par exemple via des zones de mémoire partagées.

8. Procédé selon au moins l'une des revendications 3 à 7,
dans lequel les interfaces de communication entre le conteneur IA (36) et le conteneur d'exécution (34) sont configurées automatiquement.

9. Procédé selon la revendication 8,
dans lequel, pour la configuration des interfaces de communication entre le conteneur IA (36) et le conteneur d'exécution (34), les entrées et les sorties du modèle IA sont déterminées, de préférence automatiquement, et les interfaces de communication entre le conteneur IA (36) et le conteneur d'exécution (34) sont adaptées aux entrées et aux sorties.

10. Procédé selon l'une des revendications précédentes,
dans lequel le procédé est déclenché par un opérateur, l'opérateur sélectionnant d'abord un bloc fonctionnel IA (FB4), puis le modèle IA, en particulier sous la forme d'un fichier exécutable ou d'un fichier binaire, pour le bloc fonctionnel IA (FB4).

11. Machine industrielle (10), laquelle est conçue pour :
- permettre la sélection d'un modèle IA pour un bloc fonctionnel IA (FB4), le modèle IA étant exécuté dans le bloc fonctionnel IA (FB4),
- relier le bloc fonctionnel d'IA (FB4) de manière au moins partiellement automatisée à d'autres blocs fonctionnels (FB1-FB3, FB5) d'un logiciel de commande de la machine industrielle (10),
- faire exécuter le bloc fonctionnel IA (FB4) de manière au moins partiellement automatisée,
**caractérisée en ce que** l'exécution du bloc fonctionnel IA (FB4) s'effectue au moyen d'un environnement d'exécution IEC 61499, les blocs fonctionnels (FB1-FB5) pouvant être activés par des événements et étant eux-mêmes conçus pour générer des événements afin d'activer d'autres blocs fonctionnels (FB1-FB5),
- la machine industrielle (10) est en outre conçue pour exécuter le logiciel de commande sur plusieurs dispositifs de calcul différents (12-16) reliés au moyen d'un réseau de données, l'un des dispositifs de calcul (12-16) étant sélectionné de manière automatisée pour l'exécution du bloc fonctionnel IA (FB4).

12. Machine industrielle (10) selon la revendication 11,
laquelle machine industrielle (10) comprend plusieurs dispositifs de calcul (12-16), différents dispositifs de calcul (12-16) exécutant différents desdits autres blocs fonctionnels (FB1-FB3, FB5) et les blocs fonctionnels communiquant entre eux conformément à la norme **IEC** 61499.

13. Produit logiciel comprenant des instructions qui, lors de l'exécution du programme par un ordinateur, amènent celui-ci à exécuter le procédé selon au moins l'une des revendications 1 à 10.
